# EUROPEAN PATENT SPECIFICATION

(11) **EP 1 196 338 B1**
(45) Date of publication and mention of the grant of the patent: **22.10.2003**
(21) Application number: 00940643.0
(22) Date of filing: 26.06.2000
(51) Int. Cl.: B65G 1/04, B65G 51/02

(54) **STORAGE AND RETRIEVAL SYSTEM**
SYSTEM ZUM LAGERN UND AUSLAGERN
SYSTEME DE STOCKAGE ET DE RECUPERATION

(30) Priority: 15.07.1999 EP 99305619
(43) Date of publication of application: 17.04.2002
(73) Proprietor: THE TECHNOLOGY PARTNERSHIP PUBLIC LIMITED COMPANY, Melbourn Royston Hertfordshire SG8 6EE (GB)
(72) Inventor: BLENKINSOP, Philip Thomas, Royston Herts SG8 7SD (GB)
(74) Representative: Haley, Stephen
(86) International application number: GB0002483
(87) International publication number: WO01005687

(56) References cited:
- EP-A- 0 786 748
- DE-A- 4 101 257
- FR-A- 2 087 081
- US-A- 4 793 761
- PATENT ABSTRACTS OF JAPAN vol. 1996, no. 07, 31 July 1996 (1996-07-31) & JP 08 081018 A (BROTHER IND LTD), 26 March 1996 (1996-03-26)

## Description

This invention relates to a storage and retrieval system. A document disclosing a storage and retrieval system is DE-A-4 101 257.

Storage and retrieval systems have, of course, been known for many years. In recent years there have been many attempts to alternate such systems in order to improve accuracy of storage, ensure stock records are accurate, and also to enable the employment of storage and retrieval systems as part of a larger automated process.

Such systems can be unwieldy, however. They tend to take up a considerable amount of space, require complex handling machinery, and can take a considerable amount of time to select and retrieve the necessary item. Two specific known systems are discussed in more detail below.

The present invention seeks to overcome some of the problems associated with prior art arrangements by providing a system which is extremely simple, requires minimal additional area to be provided for retrieval, and has speedy access to all of the stored items.

According to the present invention there is provided a storage and retrieval system according to claim 1.

Each hole may have a retaining member for retaining a container therein.

There may be provided plural trays, one arranged above another. In this case, each tray may have at least one through port therein in order to allow a container to pass through the tray when the through port is aligned with a manifold port.

The manifold may have plural ports formed therein.

The trays may be circular in shape.

The trays may be rotatable with respect to the manifold.

An example of the present invention will now be described with reference to the accompanying drawings, in which:
Figs. 1 and 2 are schematic side views of two prior art storage and retrieval arrangements;
Fig. 3 is a schematic side view of an example of the present invention;
Fig. 4 is a side perspective and plan view of the example of Fig. 3; and
Fig. 5 is a schematic side view of an example of the present invention during operation.

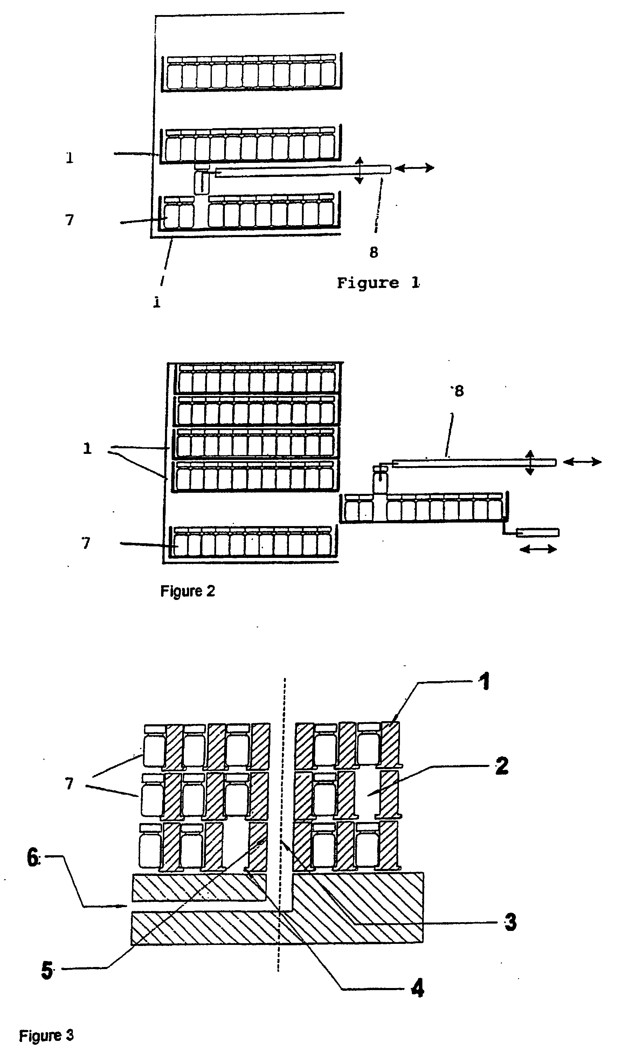

Figs. 1 and 2 show examples of known storage and retrieval systems. In both cases containers 7 are stored in a regular matrix on trays 1 which are arranged vertically. In the arrangement of Fig. 1 sufficient space is left between each tray 1 in order to enable the lifting and removal of a container 7 by a retrieval arm 8. Such an arrangement requires a number of drive mechanisms to ensure adequate movement of the arm 8, and has reduced storage density because of the need to provide a clearance space for access by the arm 8 to individual containers 7.

Fig. 2 shows a second example in which trays 1 are stacked without any clearance space, and in which individual trays 1 can be drawn out of alignment with the other trays and an arm 8 employed to remove a selected container 7. Whilst this prior art device improves storage density, it still requires a complex retrieval drive mechanism, with the added complexity of a mechanism for moving individual trays 1. Because each tray 1 has a high mass, it can be extremely costly to provide a mechanism which moves the trays at high speed or, alternatively, the retrieval process can be slow. A further disadvantage is that a considerable amount of floor space is needed to accommodate the storage mechanism in view of the need to draw individual trays 1 out from the system.

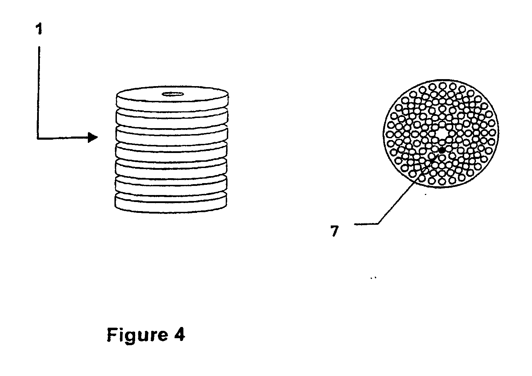

Fig. 3 is a side cross-sectional view of an example of the present invention. Components corresponding to those shown in Figs. 1 and 2 are numbered identically. In this example trays 1 have a plurality of storage holes 2, each arranged to accept, in use, a container 7. Fig. 4 shows how the holes 2 are arranged circumferentially within an individual tray 1. The trays 1 are arranged so that they can rotate around a single axis 3. Each of the storage hole 2 has a container retaining member 4 associated therewith, the purpose of which will be described below. Each tray 1 also has at least one through port 5 which has a similar cross-sectional area to the holes 2, but which has no retaining member 4. The trays 1 are arranged such that the through ports 5 on each tray 1 can be aligned and also placed in alignment with a port 6 in a gas manifold positioned, in this example, below the trays 1. In use, the port 6 supplies pressurised gas, in most applications air, up through the through ports 5. In most cases there will be a plurality of ports 6, the number of which corresponds to the number of through ports 5 provided in each tray 1.

The system of the invention can be arranged either to retrieve and store single containers or, alternatively, to remove a group of containers quickly without any particular need for a fixed sequence in which they are retrieved.

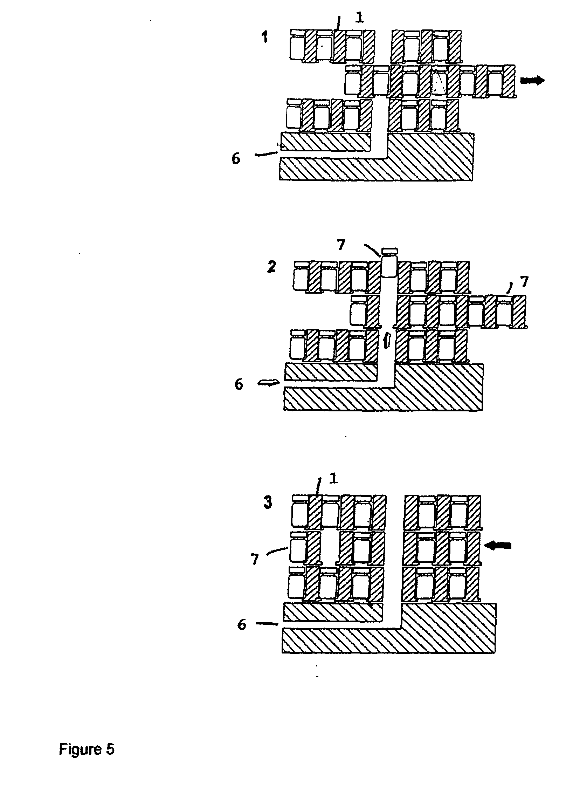

Fig. 5 shows the sequence of events when retrieving a single container. In the example of Fig. 5 slidable, rather than rotatable, trays 1 are shown, although the operation of both is very similar. In order to retrieve a container 7, the tray 1 containing the appropriate container 7 is moved to a position in which the desired container 7 is above port 6. All the other trays 1 are arranged such that their appropriate through port 5 is also in alignment with port 6. Pressurised gas is then applied through the port 6 and the container 7 is lifted from the retaining member 4 until it is proud of the top tray 1 in the system and in a position for retrieval. The tray containing the container can then be moved such that its through port 5 is in alignment once more with the port 6. Plural containers 7 may be obtained at any one time by the provision of plural through ports 5 in each tray 1 and the alignment of plural containers 7 above respective gas supply port 6, followed by the application of pressurised gas to all sets of through ports 5 in a single operation.

It will be appreciated that the system can be operated without support members 4 and with appropriate control of the supply of pressurised gas 6 to prevent a container falling downward through the aligned through ports 5 when it is in a position to be retrieved. Indeed, without the employment of such retaining members 4 and with appropriate control of the pressurised gas supply it is possible for containers to be dropped downward and retrieved from the base of the system. The gas supply can also be provided to control the raising and lowering rate of a particular container 7 to minimise any impact forces on the container 7.

The arrangement of the present invention enables a very simple handling mechanism to be provided yet does not compromise on the packing density provided by the system as a whole. Furthermore, it enables high speed retrieval of containers and therefore simple integration of the system as a whole as part of a larger automated process.

## Claims

1. A storage and retrieval system comprising:
at least one storage tray (1) comprising plural storage holes (2);
at least one gas supply port (6); and
a gas supply manifold for supplying, in use, pressurised gas to the at least one gas supply port (6); wherein
the tray (1) is arranged such that its can be moved with respect to the manifold in order to align a selected storage hole (2) in the tray (1) with the port (6) such that, in use, pressurised gas can be applied to the selected hole (2) via the port in order to allow controlled movement of a container stored in the selected hole to a position in which it can be retrieved from the tray.

2. A system according to claim 1, wherein each hole has a retaining member for retaining a container therein.

3. A system according to any preceding claim, in which there are provided plural trays, one arranged above another.

4. A system according to claim 3, wherein each tray has at least one through port (5) therein in order to allow a container to pass through the tray when the through port is aligned with a manifold port.

5. A system according to any preceding claim, in which the manifold has plural ports formed therein.

6. A system according to any preceding claim, in which the trays are circular in shape.

7. A system according to any preceding claim, in which the trays are rotatable with respect to the manifold.

8. A system according to any preceding claim, further comprising means for controlling, in use, the pressure of gas supplied through the manifold in order to control the velocity or position of a selected container during retrieval and/or insertion.

## Patentansprüche

1. System zum Lagern und Auslagern, umfassend:
wenigstens eine Lageraufnahme (1) mit mehreren Lagerlöchern (2);
wenigstens einen Gaszuführdurchgang (6); und
eine Gaszuführleitung, mit der im Gebrauch unter Druck stehendes Gas dem wenigstens einen Gaszuführdurchgang (6) zugeführt wird, wobei die Aufnahme (1) derart angeordnet ist, daß sie in Bezug auf die Leitung bewegt werden kann, um ein ausgewähltes Lagerloch (2) in der Aufnahme (1) derart mit dem Durchgang (6) fluchten zu lassen, daß im Gebrauch unter Druck stehendes Gas dem ausgewählten Loch (2) über den Durchgang zugeführt werden kann, um eine gesteuerte Bewegung eines in dem ausgewählten Loch gelagerten Behälters zu einer Position zu ermöglichen, in welcher er von der Aufnahme ausgelagert werden kann.

2. System nach Anspruch 1, bei welchem jedes Loch ein Halteelement hat, mit dem ein Behälter darin haltbar ist.

3. System nach einem der vorstehenden Ansprüche, bei welchem mehrere Aufnahmen, eine über der anderen angeordnet, vorgesehen sind.

4. System nach Anspruch 3, bei welchem jede Aufnahme wenigstens eine Durchgangsöffnung (5) darin hat, um einem Behälter zu gestatten, durch die Aufnahme zu gelangen, wenn die Durchgangsöffnung mit einem Leitungsdurchgang fluchtet.

5. System nach einem der vorstehenden Ansprüche, bei welchem die Leitung mehrere darin ausgebildete Durchgänge hat.

6. System nach einem der vorstehenden Ansprüche, bei welchem die Gestalt der Aufnahmen kreisförmig ist.

7. System nach einem der vorstehenden Ansprüche, bei welchem die Aufnahmen in Bezug auf die Leitung drehbar sind.

8. System nach einem der vorstehenden Ansprüche, des weiteren Mittel umfassend, um in Gebrauch den Druck des über die Leitung zugeführten Gases zu steuern, um die Geschwindigkeit oder Position eines ausgewählten Behälters während des Auslagerns und/oder Einführens zu steuern.

## Revendications

1. Système de stockage et de récupération comprenant :
au moins un plateau de stockage (1) comprenant une pluralité de trous de stockage (2) ;
au moins un orifice (6) ; d'alimentation en gaz ; et
un collecteur d'alimentation permettant de fournir, en fonctionnement, du gaz sous pression à au moins un orifice (6) d'alimentation en gaz ; dans lequel
le plateau (1) est agencé de façon à ce qu'il puisse être déplacé par rapport au collecteur afin d'aligner un trou de stockage (2) sélectionné dans le plateau (1) avec l'orifice (6) de façon à ce que, en fonctionnement, du gaz sous pression puisse être appliqué au trou (2) sélectionné par l'intermédiaire de l'orifice afin de permettre le déplacement commandé d'un récipient stocké dans le trou sélectionné à une position dans laquelle il peut être récupéré à partir du plateau.

2. Système selon la revendication 1, dans lequel chaque trou présente un élément de retenue pour y retenir un récipient.

3. Système selon l'une quelconque des revendications précédentes, dans lequel une pluralité de plateaux sont fournis, l'un agencé au-dessus de l'autre.

4. Système selon la revendication 3, dans lequel chaque plateau présente au moins un orifice traversant (5) ce dernier afin de permettre à un récipient de passer à travers le plateau lorsque l'orifice traversant est aligné sur un orifice - collecteur.

5. Système selon l'une quelconque des revendications précédentes, dans lequel le collecteur présente une pluralité d'orifices formés dans ce dernier.

6. Système selon l'une quelconque des revendications précédentes, dans lequel les plateaux sont de forme circulaire.

7. Système selon l'une quelconque des revendications précédentes, dans lequel les plateaux peuvent être tournés par rapport au collecteur.

8. Système selon l'une quelconque des revendications précédentes, comprenant en outre des moyens permettant de commander, en fonctionnement, la pression du gaz fourni à travers le collecteur afin de commander la vélocité ou la position d'un récipient sélectionné pendant la récupération et/ou l'insertion.
